(19) Europäisches Patentamt
European Patent Office
Office européen des brevets

(11) EP 0 963 993 A2

(12) EUROPÄISCHE PATENTANMELDUNG

(43) Veröffentlichungstag:
15.12.1999 Patentblatt 1999/50

(51) Int. Cl.⁶: C07F 7/14, C07F 7/08

(21) Anmeldenummer: 99111101.4

(22) Anmeldetag: 08.06.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 10.06.1998 DE 19825793

(71) Anmelder:
Degussa-Hüls Aktiengesellschaft
60287 Frankfurt am Main (DE)

(72) Erfinder:
• Batz-Soh, Christoph, Dr.
  63452 Hanau (DE)
• Karch, Ralf, Dr.
  63801 Kleinostheim (DE)
• Seebald, Steffen, Dr.
  63538 Grosskrotzenburg (DE)
• Prinz, Matthias
  63579 Freigericht (DE)

(54) **Neues Verfahren zur Herstellung von 3-Stellung funktionalisierten Organosilanen**

(57) Die vorliegende Erfindung betrifft ein neues Verfahren zur Herstellung von in 3-Stellung funktionalisierten Organosilanen durch die Umsetzung von geeigneten Allylverbindungen mit Hydrogensilanen unter Verwendung von Platinkatalysatoren, die einen oder mehrere schwefelhaltige Liganden besitzen.

## Beschreibung

Gegenstand der vorliegenden Erfindung ist ein Verfahren zur platin-katalysierten Herstellung von 3-funktionalisierten Propylsilanen aus Hydrogensilanen und Allylverbindungen.

Es ist bekannt daß Hydrogensilane sich mit z. B. Allylchlorid in Gegenwart von homogenen oder heterogenen Platin-Katalysatoren zu 3-Chlorpropylsilanen umsetzen lassen. Diese Reaktion wird allgemein als Hydrosilylierung bezeichnet (siehe beispielsweise Gleichung I).

$$Cl\text{-}CH_2\text{-}CH\text{=}CH_2 + HSiCl_3 \rightarrow Cl\text{-}CH_2\text{-}CH_2\text{-}CH_2\text{-}SiCl_3 \qquad (I)$$

Von homogener Hydrosilylierung spricht man, wenn als Katalysatoren lösliche Platinverbindungen, im einfachsten Falle z. B. $H_2PtCl_6$ x 6 $H_2O$ eingesetzt werden (vgl. DE-OS 28 51 456, CS-PS 176 910, US-PS 42 92 433, US-PS 42 92 434, DE-AS 11 87 240, DE-PS 11 65 028); heterogene Hydrosilylierungen benutzen elementares Platin oder Platinverbindungen auf einem Träger (vgl. US-PS 26 37 738, DE-PS 20 12 229, DE-PS 28 15 316).

Es ist weiterhin bekannt, daß bei der Umsetzung von z. B. Allylchlorid mit Hydrogensilanen zu 3-Chlorpropylsilanen ein Teil des eingesetzten Allylchlorids mit dem Hydrogensilan in einer Nebenreaktion unter Bildung von Propen und des dem jeweiligen Hydrogensilan entsprechenden Chlorsilans reagiert (siehe beispielsweise Gleichung II).

$$Cl\text{-}CH_2\text{-}CH\text{=}CH_2 + HSiCl_3 \rightarrow CH_3\text{-}CH\text{=}CH_2 + SiCl_4 \qquad (II)$$

So werden z. B. bei der Umsetzung von Allylchlorid mit Trichlorsilan 25 - 30 Mol-% des zur Reaktion gelangenden Allylchlorids durch diese Nebenreaktion in Propen umgewandelt, begleitet von der Bildung äquivalenter Mengen an Siliciumtetrachlorid. Das Molverhältnis von entstandenem Chlorpropylsilan zu Siliciumtetrachlorid im Rohprodukt ist ein Maß für die Selektivität der Reaktion und erreicht typischerweise Werte zwischen 2,33 : 1 (70 % Ausbeute bezogen auf Allylchlorid) und 3 : 1 (75 % Ausbeute).

Es ist weiterhin bekannt, daß durch spezielle Reaktionsführung in Druckapparaturen die Propenbildung gemindert werden kann; jedoch hat diese Arbeitsweise zur Folge, daß das im Rahmen der Nebenreaktion anfallende Propen quantitativ mit dem eingesetzten Hydrogensilan zu Propylsilanen weiterreagiert. Auch bei den unter Normaldruck in der üblichen Art durchgeführten Reaktionen setzt sich in beträchtlichem Umfang das aus der Nebenreaktion stammende Propen in einer weiteren Nebenreaktion mit Hydrogensilan zu den entsprechenden Propylsilanen um (vgl. auch DE 34 04 703 C) (siehe beispielsweise Gleichung 3).

$$CH_3\text{-}CH\text{=}CH_2 + HSiCl_3 \rightarrow CH_3\text{-}CH_2\text{-}CH_2\text{-}SiCl_3 \qquad (III)$$

So werden z. B. in einer technischen Anlage bei einer heterogen-katalytischen Umsetzung von Allylchlorid und Trichlorsilan in einer mit platinierter Aktivkohle gefüllten Säule pro 1000 kg 3-Chlorpropyltrichlorsilan bis zu 230 kg Propyltrichlorsilan erhalten, was einen Mehrbedarf von ca. 28 % an Trichlorsilan, bezogen auf die ins Zielprodukt eingegangene Trichlorsilan-Menge, bedeutet (vgl. auch DE 41 19 994 A1)

Das Problem bei derartigen Verfahren besteht neben dem zusätzlichen Bedarf an Hydrogensilan auch in der schwierigen Abtrennung der unerwünschten Propylsilane, für die es zusätzlich kaum Einsatzgebiete gibt, wodurch diese kostenintensiv entsorgt werden müssen.

Dieses Problem wird durch das Verfahren gemäß Anspruch 1 weiter verbessert.

Dabei werden die 3-funktionalisierten Propylsilane erhalten durch Addition von Allylverbindungen der allgemeinen Formel I

$$H_2C\text{=}CH \text{ - } CH_2X \qquad (I)$$

wobei

X = Cl,Br, I, F, CN, SCN, SH, SR, OH, $NRR^1$ und OR sein kann und R und $R^1$, beide unabhängig voneinander , ($C_1$ - $C_6$)Alkyl oder
($C_3$ - $C_7$)Aryl bedeuten,
an Silane der Formel II

$$R^2R^3R^4SiH \qquad (II)$$

wobei $R^2$, $R^3$, $R^4$, alle unabhängig voneinander, Wasserstoff, Halogen, ($C_1$ - $C_6$)Alkyl,($C_1$ - $C_6$)Haloalkyl, ($C_3$ - $C_6$)Allyl, ($C_1$ - $C_4$)Alkoxy, Phenyl, Aryl oder Aralkyl bedeuten, bei Reaktionstemperaturen zwischen 0°C und 200°C und Drücken zwischen 800 mbar und 6 bar und in Gegenwart eines Platinkatalysator, der einen oder mehrere schwefelhaltige Liganden besitzt.

Bevorzugte Ausführungsformen sind in den Unteransprüchen näher erläutert. Bevorzugt für X ist die Verwendung eines Halogens, insbesondere Chlor.

Verfahrensweise ist bei Normaldruck, Über- und Unterdruck möglich. Bevorzugt wird dabei bei Drücken zwischen 800 mbar und 6 bar gearbeitet. Insbesondere eignet sich ein Druck von 800 mbar bis 2 bar.

Die Durchführung der erfindungsgemäßen Verfahrensweise erfolgt zweckmäßigerweise derart, daß man die Allylverbindung und das im geringen Überschuß eingesetzte Hydrogensilan in einem geeigneten Gefäß gemeinsam mit dem Katalysator solange bei Temperaturen zwischen 0°C und 200°C zur Reaktion bringt, bis alles Allylchlorid umgesetzt ist.

Die als Ausgangskomponente erfindungsgemäß einsetzbaren Silane umfassen Silane des Strukturtyp II

$$R^2R^3R^4SiH \qquad\qquad (II)$$

wobei $R^2$, $R^3$ und $R^4$, alle unabhängig voneinander, Wasserstoff, Halogen, $(C_1 - C_6)$Alkyl, $(C_1 - C_6)$Alkoxy, $(C_1 - C_6)$Haloalkyl, $(C_3 - C_6)$Allyl, Phenyl, Aryl oder Aralkyl sind.

Bevorzugt werden Silane, wie Trichlorsilan oder gemischt substituierte Silane erfindungsgemäß umgesetzt, wie z. B. Methyl-, Ethyl-, Propylhydrogendichlorsilan oder Dimethylhydrogenchlorsilan.

Der verwendete Platinkatalysator kann in jeder Oxidationstufe eingesetzt werden. Prinzipiell kann der Katalysator vorher hergestellt und dem Reaktionsgemisch zugefügt werden oder in dem Reaktionsgemisch selbst erst erzeugt (in situ) werden. Die Katalyse kann sowohl homogen oder heterogen erfolgen, d. h. die zu verwendende Platinverbindung kann auch auf einen Träger (vgl. US-PS 26 37 738, DE-PS 20 12 229, DE-PS 28 15 316) aufgezogen sein. Dabei kann der Katalysator sowohl in stöchiometrischen als auch katalytischen Mengen, beispielsweise von 0,1 bis 10000 ppm, bevorzugt zwischen 10 und 500 ppm, bezogen auf die eingesetzte Allylverbindung, vorliegen. Die Herstellung von Platinverbindungen im Allgemeinen ist beschrieben in "Gmelins Handbuch der Anorganischen Chemie, 8. Auflage, Band 68, Teil D ("Komplexverbindungen [des Platins] mit neutralen Liganden").

Der Katalysator muß, um die erfindungsgemäße Wirkung zu erzielen, einen schwefelhaltigen Liganden haben. Dabei reicht es aus, wenn der schwefelhaltige Ligand eine einfache Donor / Akzeptor-Wechselwirkung zum Platinkern ausbildet. Der schwefelhaltige Ligand kann dabei einzähnig oder mehrzähnig sein und es kann sich um ein Sulfid, Sulfoxid, Sulfan, Polysulfan oder Thiol oder ganz allgemein um Schwefelverbindungen handeln, bei denen der Schwefel in der formalen Oxidationsstufe -II vorliegt. Solche Verbindungen sind dem Fachmann aus der Literatur bekannt (Houben-Weyl, Band E11, G. Thieme Verlag, Stuttgart 1985, insbesondere dort die Seiten 158ff, 669ff, 129ff, 147ff, 32ff). Die schwefelhaltigen Verbindungen können dabei einzeln oder in einem beliebigen Gemisch Anwendung finden. Somit werden vom erfindungsgemäßen Verfahren schwefelhaltige Liganden folgenden Strukturtyps erfaßt:

$R^5SR^6$, $R^7S(O)R^8$, $R^9S_zR^{10}$, $R^9S_zR^{10}S_yR^{11}$ wobei
$R^5$, $R^6$, $R^7$, $R^8$, $R^9$, $R^{10}$, $R^{11}$ beliebige organische Reste oder
H, sowie z, y gleich ganze Zahlen zwischen 2 und 6 einnehmen können. Beispielsweise können als Liganden eingesetzt werden Sulfane wie Ethylmethylsulfid, Ethylphenylsulfid, Allylphenylsulfid, Benzyl-2,2,2-trifluorethylsulfid, Bis-(2-mercaptoethyl)-sulfid, Bis-(trimethylsilylmethyl)sulfid, 2-Chlorethylmethylsulfid, 2-Chlorethylphenylsulfid, 2-Chlor-3,4-dime-5-phe-1,3,2-oxazaphospholidin-2-sulfid, Chlordimethylsulfid, Chlormethylphenylsulfid, Diethylsulid, Diallylsulfid, Dibenzylsulfid, Dibutylsulfid, Di-tert.-butylsulfid, Dimethylsulfid, Dimethylsulfid, Dioctylsulfid, Diphenylsulfid, Dipropylsulfid, 2-Hydroxyethylmethylsulfid, 2-Hydroxyethylphenylsulfid, Phenylvinylsulfid, Phosphorsesquisulfid, Propylensulfid, Tetraethylthiuramdisulfid, Tetramethylthiuramdisulfid, Tris(methylthio)methan, Bis-[3-(triethoxysilyl)-propyl]-sulfid, zyklische Sulfane wie 1,4-Oxathian, 2,5-Dihydroxy-1,4-dithian, 1,3-Dithian, 1,3-Dithian-2-carbonsäureethylester, Hexamethyldisilthian, 2-Methyl-1,3-dithian, Thianthren, 2-Trimethylsilyl-1,3-dithian, 1,3,5-Trithian, Tetrahydrothiophen, Trimethylensulfid, 1,4,7-Trithiacyclononan, 1,4,7,-Trithiacyclodecan, Di- und Polysulfane wie Bis-(2-nitrophenyl)disulfid, Bis-[3-(triethoxysilyl)-propyl]tetrasulfid, Bis-[3-(triethoxysilyl)-propyl]disulfid, Diallyldisulfid, Dibenzyldisulfid, Di-tert.-butyldisulfid, Dibutyldisulfid, Dimethyldisulfid, Diphenyldisulfid, Dipropyldisulfid, Sulfoxide wie Allylphenylsulfoxid, Chlormethylphenylsulfoxid, Dibenzylsulfoxid, Dimethylsulfoxid, Diphenylsulfoxid, Ethylethylthiomethylsulfoxid, DL-Methioninsulfoxid, Methylmethylthiomethylsulfoxid, Methylphenylsulfoxid, R(+)-Methyl-p-tolylsulfoxid, S(-)-Methyl-p-tolylsulfoxid, Phenylvinylsulfoxid, Tetrahydrothiophen-1-oxid, Thiophene wie Thiophen, 2-Acetylthiophen, 3-Acetyl-thiophen, 2-Ethylthiophen, DL-alpha-Aminothiophen-2-essigsäure, 1-Benzothiophen, 2,5-Bis-(5-tert.-butyl-benzoxazol-2-yl)thiophen, 2,2'-Bithiophen, 2-Brom-thiophen, 3-Bromthiophen, 2-Chlorthiophen, 2,3-Dibromthiophen, 3,4-Dibromthiophen, 6,7-Dihydro-4-benzo[b]thiophenon, 2,5-Dimethylthiophen, 2-Hydroxymethyl-thiophen, 2-Iodthiophen, 3-Methoxythiophen, 2-Methylthiophen, 3-Methylthiophen, 3-Methylthiophen-2-carbaldehyd, 5-Methyl-thiophen-2-carbaldehyd, 5-Methyl-thiophen-2-carbonsäure, 2,2',5',2"-Terthiophen, Thiophen-2-acetonitril, Thiophen-3-acetonitril, Thiophen-2-acetylchlorid, Thiophen-2-carbaldehyd, Thiophen-3-carbaldehyd, Thiophen-2-carbonsäure, Thiophen-3-carbonsäure, Thiophen-2-carbonsäurechlorid, Thiophen-2-essigsäure, Thiophen-3-essigsäure, Thiophen-2-essigsäuremethylester, 2-Thiophenthiol, Thiazole wie Thiazol, 2-Acetylthiazol, 2-Aminobenzothiazol, 2-Amino-5-nitrothiazol, 2-(4-Aminophenyl)-6-methylbenzothiazol, 2-Aminothiazol, 2-Amino-2-thiazolin, 2-Amino-4-thiazolylessigsäureethylester, 2,2'-Azino-bis(3-ethylbenzothiazolin-6-sulfonsäure), Benzothiazol, 3-(Benzothiazol-2-ylthio)-1-propansulfonsäure, 2-Bromthiazol, 2-Chlorbenzothiazol, 2,3-Dihydro-3,3-dimethyl-1,2-benzisothiazol-1,1-dioxid, 2,5-Dimethylbenzothiazol, 2,2'-Dithio-bis-(4-methylthiazol), 2-Fluor-3,3-dim.-2,3-dihyd.-1,2-benziso- thiazol-1,1-dioxid, 5-(2-Hydroxyethyl)-4-methylthiazol, 3-Hydroxy-4-methyl-2(3H)-thiazolthion, 2-Mercaptobenzothiazol, 2-Mercapto-2-thiazolin, 2-Methylbenzothiazol, 2-(Methylmercapto)-2-thiazolin, 2-Methylnaphtho(1,2-d)thiazol, 5-Methylthiazol, 2-Methyl-2-thiazolin, R(-)-2-Oxo-thiazolidin-4-carbonsäure, Succinylsulfathiazol, L-Thiazolidin-4-carbonsäure, 2,4-Thiazolidindion, 1-(2-Thiazolylazo)-2-naphthol, 4-(2-Thiazolyiazo)resorcin, R(-)-2-Thioxo-thiazolidin-4-carbonsäure, 2-(Trimethylsilyl)thiazol. Bevorzugte schwefelhaltige Liganden sind insbesondere Diethylsulfid, Dimethylsulfoxid, Tetrahydrothiophen, Benzothiazol, Thiophen, Dibenzyldisulfid, 1,3-Dithian, Tris(methylthio)methan, Dimethylsulfid, Dibenzylsulfid, Diallylsulfid.

Unter der Bezeichnung "Alkyl" sind sowohl "geradkettige" als auch "verzweigte" Alkylgruppen zu verstehen. Unter der Bezeichnung "geradkettige Alkylgruppe" sind beispielsweise Reste wie Methyl-, Ethyl-, n-Propyl, n-Butyl, n-Pentyl, n-Hexyl, unter "verzweigter Alkylgruppe" Reste wie beispielsweise Isopropyl oder tert.-Butyl zu verstehen. Die Bezeichnung Halogen steht für Fluor, Chlor, Brom oder Jod. Die Bezeichnung "Alkoxy" stellt Reste wie beispielsweise Methoxy, Ethoxy, Propoxy, Butoxy, Isopropoxy, Isobutoxy oder Pentoxy dar.

Unter "Aryl" sind im erfindungsgemäßen Rahmen $(C_1 - C_6)$alkyl-, $(C_1 - C_6)$alkoxy-, halogen- oder mit Heteroatomen wie N, O, wie Phenole, P oder S substituierte Phenyle, Biphenyle oder sonstige benzoide Verbindungen zu verstehen. "Arylalkyl" ist so zu verstehen, daß die oben bezeichneten "Aryle" über eine $(C_1 - C_6)$Alkylkette, die ihrer-seits $(C_1 - C_4)$alkyl- oder halogensubstituiert sein kann, mit dem entsprechenden Siliciumatom verbunden ist. Verfügt "Aryl" über ein Heteroatom wie O oder S, dann kann die $(C_1 - C_6)$Alkylkette auch über das Heteroatom mit dem Siliciumatom eine Verbindung herstellen.

Bei Angabe der Substituenten, wie z. B. $(C_1 - C_4)$ Alkoxy, bezeichnet die Zahl im Index die Anzahl aller Kohlenstoffatome im Rest.

Die nachfolgenden Beispiele 1 bis 4 demonstrieren exemplarisch das erfindungsgemäße Verfahren. Die Beispiele 5 bis 7 dienen als Vergleichsbeispiele.

Unter der Angabe Selektivität wird dabei das Molverhältnis zwischen dem gewünschten Produkt 3-Chlorpropyltrichlorsilan (Cl-PTS) und Siliciumtetrachlorid verstanden. Die erfindungsgemäßen Beispiele demonstrieren dabei im Verhältnis der erzielten Selektivitäten und der Ausbeute an 3-Chlorpropyltrichlorsilan die Überlegenheit des neuen Verfahren gegenüber herkömmlichen Verfahren (vgl. Vergleichsbeispiele 5 bis 7).

## Beispiele

## Beispiel 1

In einem 500 ml Dreihalskoben mit Heizpilz, Magnetrührer, Innenthermometer und einem intensiv auf -30°C gekühlten Rückflußkühler werden 100 g (472 mmol) 3-Chlorpropyltrichlorsilan, 76.6 g (1 mol) Allylchlorid und 142.3 g (1,05 mol) Trichlorsilan vermischt und mit 37.0 mg (0.10 mmol) $DMSO(C_2H_4)PtCl_2$ (V.Y.Kukushkin et al, Inorg. Chim. Acta 185 (1991), 143) versetzt und zum Sieden erhitzt. Im Reaktionsverlauf steigt durch die Umsetzung der Niedrigsieder zu höher siedenden Produkten die Innentemperatur. Die Reaktion wird beendet, wenn die Siedetemperatur auf hohem Niveau über längere Zeit konstant bleibt. Danach wird abgekühlt und das entstandene Produktgemisch gaschromatographisch untersucht. Nach Abzug des als Lösungsmittels eingesetzten 3-Chlorpropyltrichlorsilans ergibt sich folgende Produktzusammensetzung:

| | |
|---|---|
| 2,12 Gew.-% | Trichlorsilan (TCS) |
| 0,04 Gew.-% | Allylchlorid (ACl) |
| 16,72 Gew.-% | Siliciumtetrachlorid (STC) |
| 2,73 Gew.-% | Propyltrichlorsilan (PTS) |
| 78,38 Gew.-% | 3-Chlorpropyltrichlorsilan (Cl-PTS) |

Somit ergibt sich für die auf die Stoffmengen bezogene Selektivität der Reaktion ein Wert von 3,76 : 1, was einer Ausbeute von 3-Chlorpropyltrichlorsilan bezogen auf Allylchlorid von 79,0 % entspricht.

**Beispiele 2 bis 4**

Unter analogen Bedingungen, wie in Beispiel 1 beschrieben, werden verschiedene andere homogene Katalysatoren eingesetzt. Die dabei erzielten Ergebnisse sind in der nachstehenden Tabelle angeführt:

|  | Katalysator, Menge | Produktzusammensetzung (Gew.-%) | | Selektivität (Ausbeute bzgl. Allylchlorid) |
|---|---|---|---|---|
| Bsp. 2 | 44.0 mg (0.10 mmol) $THT_2PtCl_2$ (THT = Tetrahydro<->thiophen, E. G. Cox et al., J. Chem. Sec. A (1934), 182) | TCS: ACl: STC: PTS: Cl-PTS: | 0,04 0,13 17,80 1,50 80,36 | 3,62 : 1 (78,4 %) |
| Bsp. 3 | 42.0 mg (0.10 mmol) $DMSO_2PtCl_2$ (Dimethylsulfoxid, J. H. Pierce et al, Inorg. Chem. 11 (1972), 1280) | TCS: ACl: STC: PTS: Cl-PTS: | 2,14 0,05 18,23 2,13 77,36 | 3,40 : 1 (77,3 %) |
| Bsp 4 | 45.0 mg (0.10 mmol) $(Et_2S)_2PtCl_2$ (E. G. Cox et al., J. Chem. Soc. A (1934), 182) | TCS: ACl: STC: PTS: Cl-PTS: | 1,03 0,02 18,46 2,09 78,37 | 3,40 : 1 (77,3 %) |

**Beispiele 5 bis 7 (Vergleichsbeispiele)**

Unter analogen Bedingungen, wie in Beispiel 1 beschrieben, werden verschiedene andere homogene Katalysatoren eingesetzt. Die dabei erzielten Ergebnisse sind in der nachstehenden Tabelle aufgeführt:

|  | Katalysator | Produktzusammensetzung | | Selektivität (Ausbeute bzgl. Allylchlorid) |
|---|---|---|---|---|
| Bsp. 5 | $H_2PtCl_6$ x 6 $H_2O$ (CPA), 41 mg | TCS: ACl: STC: PTS: Cl-PTS: | 0,15 1,67 21,71 3,54 72,88 | 2,69 : 1 (72,9 %) |

(fortgesetzt)

|  | | Katalysator | Produktzusammenset-zung | | Selektivität (Ausbeute bzgl. Allylchlorid) |
|---|---|---|---|---|---|
| Bsp. 6 | $(Ph_3P)_2PtCl_2$ (P. J. Stang et al., J. Organomet. Chem. 388 (1990), 215) | TCS: ACl: STC: PTS: Cl-PTS: | 1,78 - 22,77 2,14 73,78 | | 2,60 : 1 (72,2 %) |
| Bsp.7 | CPA (0,1 M in i-Propanol), 0,2 ml + dppe (0,1 M in PhH), 0,1 ml | TCS: ACl: STC: PTS: Cl-PTS: | 1,19 - 20,12 1,45 77,06 | | 3,07 : 1 (75,4 %) |

**Patentansprüche**

1. Verfahren zur Herstellung von 3-funktionalisierten Propylsilanen durch Addition von Allylverbindungen der allgemeinen Formel I

$$H_2C=CH - CH_2X \qquad (I)$$

wobei X = Cl,Br, I, F, CN, SCN, SH, SR, OH, $NRR^1$ und OR sein kann und R und $R^1$, beide unabhängig voneinander, $(C_1 - C_6)$Alkyl oder $(C_3 - C_7)$Aryl bedeuten, an Silane der Formel II

$$R^2R^3R^4SiH \qquad (II)$$

wobei $R^2$, $R^3$, $R^4$, alle unabhängig voneinander, Wasserstoff, Halogen, $(C_1 - C_6)$ Alkyl, $(C_1 - C_6)$Haloalkyl, $(C_3 - C_6)$Allyl, $(C_1 - C_4)$Alkoxy, Phenyl, Aryl oder Aralkyl bedeuten können, bei Reaktionstemperaturen zwischen 0°C und 200°C und Drücken zwischen 800 mbar und 6 bar und in Gegenwart eines Platinkatalysators, der einen oder mehrere schwefelhaltige Liganden besitzt.

2. Verfahren nach Anspruch 1,
**dadurch gekennzeichnet**,
daß X = F, Cl, Br, oder I ist.

3. Verfahren nach Anspruch 1 oder 2,
**dadurch gekennzeichnet**,
daß X = Cl ist.

4. Verfahren nach einem oder mehreren der voranstehenden Ansprüche,
**dadurch gekennzeichnet**,
daß als Silan der Formel II, Trichlorsilan, Methylhydrogendichlorsilan, Ethylhydrogendichlorsilan, Propylhydrogendichlorsilan oder Dimethylhydrogenchlorsilan verwendet wird.

5. Verfahren nach einem oder mehreren der voranstehenden Ansprüchen,
**dadurch gekennzeichnet**,
daß das schwefelhaltige Ligand ein- oder mehrzähnig und ein Sulfid, Sulfoxid, Sulfan, Polysulfan oder Thiol ist.

6. Verfahren Anspruch 5,
**dadurch gekennzeichnet**,
daß als schwefelhaltiger Ligand, Diethylsulfid, Dimethylsulfoxid, Tetrahydrothiophen, Benzothiazol, Thiophen, Dibenzyldisulfid, 1,3-Dithian, Tris(methylthio)methan, Dimethylsulfid, Dibenzylsulfid, Diallylsulfid oder Gemische daraus Verwendung finden.

7. Verfahren nach einem oder mehreren der voranstehenden Ansprüche,
   **dadurch gekennzeichnet**,
   daß die Katalysatorkonzentration zwischen 0,1 und 10000 ppm, vorzugsweise zwischen 10 und 500 ppm liegt, bezogen auf die Allylverbindung.

8. Verfahren nach einem oder mehreren der voranstehenden Ansprüche,
   **dadurch gekennzeichnet**,
   daß die Umsetzung bei Drücken zwischen 800 mbar bis 2 bar erfolgt.

9. Verwendung von Platinkatalylsatoren mit schwefelhaltigen Liganden in der Additionsreaktion gemäß Anspruch 1.